# EUROPEAN PATENT APPLICATION

(11) **EP 1 983 600 A1**
(43) Date of publication of application: **22.10.2008**
(21) Application number: 07106452.1
(22) Date of filing: 18.04.2007
(51) Int. Cl.: H01M 10/44, H01M 10/42, H01M 10/06, H02J 7/00

(54) **Electrical circuit for decomposing and removing a solid material from a secondary battery**

(71) Applicant: Jung, Jae Jin, 151-789 Seoul (KR); Lee, Cheon-Seok, 304-824 Incheon (KR); Rhee, Soung Lyoul, 157-762 Seoul (KR)
(72) Inventor: Jung, Jae Jin, 151-789 Seoul (KR); Lee, Cheon-Seok, 304-824 Incheon (KR); Rhee, Soung Lyoul, 157-762 Seoul (KR)
(74) Representative: Gill, David Alan

(57) **Abstract**

The present invention relates to a solid material decomposing and removing circuit of a battery. According to the present invention, voltage supplied from a power supply device in order to be charged into the battery becomes a constant voltage through a regulator, and supply voltage and current are controlled while supplying an electrode plate of the battery with a high frequency variable voltage having a band of 10MHz to 13MHz, which is amplified from a DC voltage of 13.6V to 14.5V, so that a reduction of the battery charging capacity can be prevented by decomposing and removing solidified sulphuric acid material, which is formed in the electrode plate of the battery due to a sulphation phenomenon of the battery because of a shortly repeated charging and discharging time during the charging and discharging processes, and the charging state of the battery returns to its initial charging state (when specific gravity is 1.200 at an electrolyte temperature of 25 degrees Celsius), thereby enabling a long term use of the battery.

## Description

The present invention relates, in general, to a solidified sulphuric acid material decomposing and removing circuit using a solid material decomposing and removing circuit of a battery, and more particularly, to a solid material decomposing and removing circuit of a battery, in which supply voltage and current are controlled while supplying an electrode plate of the battery with a high frequency variable voltage having a band of 10MHz to 13MHz, which is amplified from a constant voltage of 13.6 V to 14.5V to be charged into the battery, so that a reduction of the battery charging capacity can be prevented by decomposing and removing sulphuric acid material, which is solidified on the electrode plate of the battery due to a shortly repeated charging and discharging time during the charging and discharging processes, and the charging state of the battery returns to its initial charging state, thereby enabling a long term use of the battery.

In general, a battery includes positive and negative electrode plates and electrolyte, and is a device that can be used as electrical power by generating DC electromotive force through a chemical reaction. It is a well-known fact that a state where chemical energy is changed to electrical energy refers to discharging, and a state where electrical energy supplied from external power is changed to chemical energy and then accumulated refers to charging.

A battery in which charging and discharging are repeated as described above is referred to as a storage battery or a secondary battery. The storage battery or the secondary battery has been widely used for a battery for vehicles, a battery for home electronic appliances such as electric shaver, a battery for mobile phones, a battery for notebook computers and so on.

Further, of the batteries, a battery having a high internal resistance is charged by means of a pulse charging method.

The pulse charging method is a method of charging the battery according to a clock pulse. In this method, when alternating current power of a set level is higher than a set voltage and voltage of the battery is lower than a battery fully charged voltage, the battery is charged.

In the conventional pulse charging method, in order to charge the battery at the duty ratio of 50%, when the alternating current power has the highest value of 5V, a set constant voltage is set to about 3.53 V. The state of current charged into the battery through the above operation is as follows.

In other words, in order to charge the battery by compensating for internal resistance components of the battery near a fully charged voltage of the battery while charging the battery at a predetermined voltage, the supply of a pulse is stopped so that the current charged into the battery gradually decreases.

However, the above prior art is disadvantageous in that time taken for the charge voltage of the battery to reach the fully charged voltage is long because the current until the fully charged time is charged into the battery constantly, e.g., at the duty ratio of about 50%.

Therefore, there was proposed Korean Patent Application No. 1998-0042701 (applied on October 13, 1998) entitled "Battery Charging Circuit of Pulse Charging Method". In this patent, the duty ratio of an on-period where a pulse is charged in order to reach battery fully charged voltage is varied depending on battery voltage, making fast battery charging time.

The battery charging circuit of the above patent includes a charging unit, a switching unit, an electric wave rectification unit, a switching driving unit and a switching driving control unit.

The charging unit is adapted to charge input current.

The switching unit is adapted to control the amount of current charged into the charging unit through a switching operation.

The electric wave rectification unit is adapted to rectify input electrical power and output alternating current power.

The switching driving unit compares the voltage of a battery with a battery fully charged voltage while comparing the output of the electric wave rectification unit with a compare voltage, and differentiates an output signal depending on the compared value.

The switching driving control unit level-shifts the voltage of the battery in order to make it the compare voltage, and then outputs the resulting voltage to the switching driving unit. The switching driving control unit uses the voltage of the charging unit as an input and level-shifts the voltage of the charging unit so that it becomes a set compare voltage of the switching unit, in order for the current initially input to the charging unit to linearly decrease from the highest value until the voltage of the charging unit becomes a fully charged voltage. Accordingly, charging of the battery can be accomplished within a short period of time while the charging current of the battery gradually decreases from the highest value to the battery fully charged voltage.

However, in the conventional battery charging circuit of the pulse charging method, the speed of charging can be fast by applying voltage of a pulse wave when charge voltage is applied to the battery. However, while charging and discharging are repeated, alien substance, which is oxidized and adhered to the electrode plate of the battery, is not decomposed. The alien substance increases internal resistance, significantly lowering the efficiency of the battery. Thus, there were problems in that the charging capacity of the battery is reduced and the battery cannot be used for a long time.

If the battery is left alone in a discharging state, opal crystals are created on the surface of the plate. The crystals are non-conductive lead sulfate. This phenomenon is called an inconvertibility sulfurization phenomenon or sulphation.

If the sulphation state proceeds, the plate is not reduced to an original over-oxidizing spongy phase although it is charged.

Furthermore, as the battery is used for a long time, the performance of the battery is lowered, the capacity of the battery is lowered, and a self-discharging amount is increased. Consequently, the battery cannot be used.

One of the major factors to affect the lifespan of the storage battery includes detachment of acting material of the positive plate. The acting material has its volume expanded and shrunk as charging and discharging are repeated. Due to this, lead peroxide having weak coupling force is broken and fallen off, and the negative plate loses porosity due to shrunken spongy lead.

Further, the lifespan of the storage battery is often reduced due to causes, such as a broken plate caused by mechanical vibration, sulphation, degradation of an isolation plate, over-charging and over-discharging. In addition, there are lots of factors, such as temperature rise of electrolyte upon charging and bad handling. The lifespan of the battery is difficult to indicate values as a whole.

Main causes that shorten the lifespan of the battery are as follows:

First, sulphation due to short charging,

Second, temperature rise due to over-charging, degradation of the isolation plate, crack lattice of the positive plate, and softened paste of the negative plate,

Third, bending or sulphation of the negative plate due to over-discharging,

Fourth, sulphation caused by an exposed plate due to short electrolyte,

Fifth, when specific gravity of electrolyte is too high,

Sixth, electrolyte containing impurities,

Seventh, short, detachment, etc. of the plate within a casing and the forth.

However, while the charging/discharging cycles are performed for a long period of time, there occurs a case where sulphate adhered at the time of discharging (including self-discharging) is adhered to the plate without being detached upon charging. This phenomenon is referred to as a sulfur oxidization phenomenon (a sulfur softening phenomenon).

In other words, sulphate SO₄ forms coupling with the plate and another sulphate SO₄ in an active material layer and covers the plate in a membrane shape to form an insulating layer, so that a chemical electrical reaction precludes a path and serves as an insulating function.

The insulating function causes to lower the voltage capacity and specific gravity of the battery, and also to obviate sulfur molecules forming sulfur oxidization of the battery from the electrolyte, making the electrolyte within the battery inefficient.

This phenomenon becomes profound as the battery is greatly discharged and the number of the charging/discharging cycle increases. The lifespan of a general soft acid (lead acid) battery is finished due to the repetition of this phenomenon, and electromotive force of about 80% or higher is lost. Thus, the battery is wasted and disused.

Thus, Korean Patent Registration No. 338897 (entitled "Lifespan Extending Apparatus for Efficient Use of Battery") was proposed. The lifespan extending apparatus connected to a battery includes a status-monitoring unit, and a pulse generator, which is one of the remaining constituent elements other than the status-monitoring unit.

The status-monitoring unit includes a voltage detector for detecting voltage between first and second power supply terminals of the battery and generating a driving signal when voltage higher than a holding voltage of the battery is applied between the first and second power supply terminals of the battery, and a driving switch that is driven when an output voltage of the voltage detector is higher than the holding voltage of the battery by a predetermined level and outputs the driving signal.

The voltage detector includes a diode connected to the first power supply terminal in a forward direction, a resistor having one end connected to the diode, and a variable resistor connected between the other end of the resistor and the ground.

The driving switch includes a transistor having a base connected to the variable resistor, an emitter grounded, and a collector supplied with the driving signal.

The pulse generator generates a DC pulse in response to the driving signal of the status-monitoring unit, and supplies the DC pulse to the first power supply terminal of the battery. The pulse generator includes an oscillator that generates a clock signal oscillating at a predetermined frequency in response to the driving signal, a switch that performs a switching operation in response to the clock signal of the oscillator, and a DC pulse generator connected between the first power supply terminal and the output terminal of the switch and configured to generate the DC pulse by means of counter electromotive force of a coil, which is generated by means of the switching operation of the switch.

The oscillator includes an oscillating circuit for generating a frequency of 10.1 KHz. The switch includes a transistor having an emitter grounded, a base connected to the output of the oscillator, and a collector connected to the DC pulse generator.

The DC pulse generator includes a diode connected between the first power supply terminal and the output terminal of the switch in a reverse direction, a resistor having one end connected to the cathode of the diode, a capacitor connected between the other end of the resistor and the ground, and a inductor coil connected between the other end of the resistor and the output terminal of the switch.

The lifespan extending apparatus constructed above for an efficient use of the battery outputs DC voltage of 13.2 to 13.8 V converted from AC voltage output from a generator if start-up begins.

The status-monitoring unit generates a driving signal when voltage applied between the first and second power supply terminals of the battery is higher than 13.2 V. The transistor is turned on so that current flows through its collector-emitter. The oscillator within the pulse generator is turned on to perform an oscillation operation.

Therefore, the base of the transistor, that is, the switch is applied with "High" having a cycle of about 10 KHz, and thus alternately perform turn-on and turn-off switching operations.

Thus, a counter electromotive force is generated in the coil of the DC pulse generator and is then supplied to the first second power supply terminal of the battery as a DC pulse.

Accordingly, a square wave pulse having 13.2 V or higher is consecutively applied to the positive plate as several tens of KHz through the anode of the battery, and the square wave pulse has a current of about 2 A. Thus, crystallized sulphate accumulated on the electrode plate of the battery is reactivated and becomes active sulfur molecules, which then return to the electrolyte of the battery solution.

However, in the conventional lifespan extending apparatus for an efficient use of the battery, while the generator generates electricity after the start-up of a vehicle begins, the DC pulse is applied. Thus, there is a disadvantage in that the operation is unnecessarily performed. Further, since a high current of 2A flows through the transistor, that is, the switch, excessive heat is generated while the transistor is repeatedly turned on or off. In addition, the lifespan extending apparatus must continue to operate with the vehicle being started up. Accordingly, there was a problem in that the transistor is overheated and broken.

Incidentally, if the transistor, that is, the switch is damaged due to over-heat, it cannot be recognized even though the transistor keeps turned on. Thus, there was a problem in that the DC pulse is continuously supplied in a state where the start-up has not begun, but not the cycle of the oscillator.

Furthermore, U.S. Patent No. 5,648,714 (entitled "Battery Charging and Conditioning Apparatus") was proposed. Claims of the patent are as follows.

12. A device for charging and conditioning a battery, comprising:

a first circuit for generating a variable trickle battery charging current;

a second circuit for generating a variable pulsed battery conditioning current;

means for connecting the first and second circuits to the battery;

a sensor connected to the battery for sensing an impedance characteristic and a no load voltage characteristic of the battery, and for generating output signals indicative thereof; and

a processing unit connected to the first and second circuits to control operation thereof, and connected to the sensor to receive the output impedance characteristic and voltage characteristic signals, the processing unit selecting, based on the sensed impedance characteristic and voltage characteristic of the battery, a value for the variable trickle battery charging current and a value for the variable pulsed battery conditioning current to be applied to the battery by the first and second circuits, respectively.

22. A device for conditioning a battery, comprising:

a circuit for generating a variable pulsed battery conditioning current;

means for connecting the circuit to the battery;

a sensor connected to the battery for sensing an impedance characteristic and a no load voltage characteristic of the battery, and for generating output signals indicative thereof; and

a processing unit connected to the circuit to control operation thereof, and connected to the sensor to receive the output impedance characteristic and voltage characteristic signals, the processing unit selecting, based on the sensed impedance characteristic and voltage characteristic of the battery, a value for the variable pulsed battery conditioning current to be applied to the battery by the circuit.

The battery charging and conditioning apparatus constructed above can prevent sulphuric acid material from being solidified on the electrode plate to some degree in a state where a pulse is applied to the electrode of the battery, but is problematic in that it is not effective in separating and removing sulphuric acid material that has already been solidified.

Korean Patent Registration No. 10-0439356 (entitled "Charge voltage Compensation Stabilization Circuit of Battery") was also proposed. The patent discloses a charge voltage compensation stabilization circuit of a battery in which a charge voltage is supplied from an external charging circuit to the battery through a power line, wherein a driving voltage is applied to a controller through a diode for preventing inverse voltage and a constant voltage diode for driving across the power line, input voltage is input from the power line to the controller through a divided resistor, a BCD code conversion IC that receives an output signal from a controller having an analog/digital converter built therein displays a current voltage and a charge voltage of the battery, as numerals, on a plurality of display windows of a voltage display unit, and a Field Effect Transistor (FET) having a gate to which a pulse voltage of a square wave is input from the controller that receives an oscillation frequency from the oscillator applies a double surging pulse voltage to the electrode plate of the battery through the power line via a choke coil of a peak-peak generator connected to the source of the FET, a resistor and a diode.

In the conventional charge voltage compensation stabilization circuit of the battery, solidified sulphuric acid material is separated while a surging pulse converted from a pulse is applied to the electrode of the battery. However, management is not accurately performed depending on the discharging state of the battery since current or voltage is applied as a constant value. Thus, the conventional charge voltage compensation stabilization circuit is problematic in that it is not effective in returning the charging capacity of the battery to its original state.

Accordingly, the present invention has been made in an effort to solve the above problems occurring in the prior art, and it is an object of the present invention to provide a solid material decomposing and removing circuit of a battery, in which voltage supplied from a power supply device in order to be charged into the battery becomes a constant voltage of 14.5V through a regulator, and supply voltage and current are controlled while supplying an electrode plate of the battery with a high frequency variable voltage having a band of 10MHz to 13MHz, which is amplified from a DC voltage of 13.6 V to 14.5V, so that a reduction of the battery charging capacity can be prevented by decomposing and removing solidified sulphuric acid material, which is formed in the electrode plate of the battery due to a sulphation phenomenon of the battery because of a shortly repeated charging and discharging time during the charging and discharging processes, and the charging state of the battery returns to its initial charging state, thereby enabling a long term use of the battery.

To achieve the above object, the present invention provides a solid material decomposing and removing circuit of a battery, including a voltmeter connected to a power line for supplying charge electric power from a power supply device to battery and configured to measure and display voltage values of an initial voltage of the battery and a supplied charge voltage, an amperemeter for measuring and displaying a current value of the charge voltage passing through the voltmeter , a charge electric power recognition unit for recognizing a voltage value and a current value charged into the battery through the voltmeter and the amperemeter, a battery state recognition unit for recognizing a voltage value discharged from the battery, a controller for determining the state of the battery based on the voltage value and the current value of the charge voltage and the voltage value of the battery which are received through the charge electric power recognition unit and the battery state recognition unit, deciding the intensity of current and voltage to be supplied at the time of charging, and controlling an internal operation, a charge voltage control unit for controlling the amount of voltage charged into the battery through the voltmeter and the amperemeter under the control of the controller, a charging current control unit for controlling the amount of current charged into the battery under the control of the controller, a charging unit for charging the battery with electric power having a controlled current value and voltage value under the control of the controller, a driving voltage generator for generating a driving voltage in response to a control signal output from the controller only while the charging is performed, a high frequency variable voltage generator for supplying the charging unit with a variable voltage of a high frequency by means of high frequency variable oscillation as the driving voltage generator operates so that the high frequency variable voltage is applied to the electrode plate of the battery, and a protection circuit for determining whether a charge voltage from the charging unit is applied to the battery, and sending the determination result to the controller so that an operating state can be recognized.

The high frequency variable voltage generator controls the variable bandwidth of the high frequency to be 13MHz in the case of a charging amount of 5%, a discharging amount of 95% and a specific gravity of 1.090, 12.5MHz in the case of a charging amount of 20%, a discharging amount of 80% and a specific gravity of 1.120, 12MHz in the case of a charging amount of 35%, a discharging amount of 65% and a specific gravity of 1.150, 11.5MHz in the case of a charging amount of 50%, a discharging amount of 50% and a specific gravity of 1.180, 11MHz in the case of a charging amount of 65%, a discharging amount of 35% and a specific gravity of 1.210, 10.5MHz in the case of a charging amount of 80%, a discharging amount of 20% and a specific gravity of 1.240, and 10MHz in the case of a charging amount of 90%, a discharging amount of 10% and a specific gravity of 1.260, when an electrolyte temperature of the battery is 25 degrees Celsius, under the control of the controller, while determining the state of the battery according to a voltage value and a current value of the battery.

Further objects and advantages of the invention can be more fully understood from the following detailed description taken in conjunction with the accompanying drawings in which:

FIG. 1 is a block diagram showing an overall construction of the present invention; and

FIG. 2 is a circuit diagram showing the construction of a driving voltage generator and a high frequency variable voltage generator of the present invention.

The present invention will now be described in detail in connection with a specific embodiment with reference to the accompanying drawings.

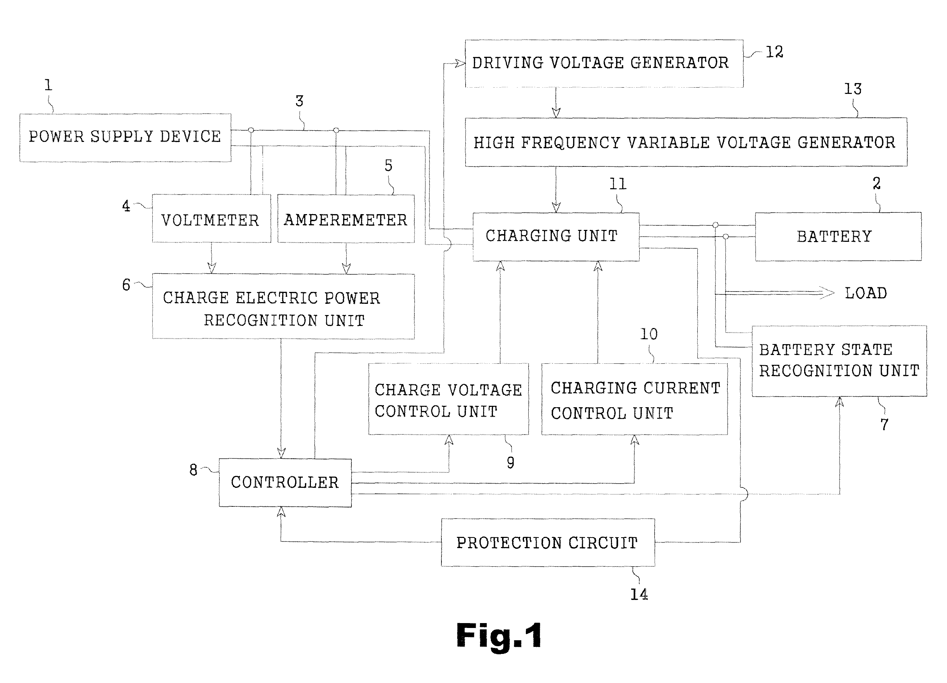

FIG. 1 is a schematic block diagram showing an overall construction of the present invention. The solid material decomposing and removing circuit of a battery according to the present invention is adapted to decompose and remove sulphuric acid material solidified on the battery by means of a sulphation phenomenon.

The solid material decomposing and removing circuit includes a voltmeter 4 connected to a power line 3 for supplying charge electric power from an external power supply device 1 to battery 2 and configured to measure and display voltage values of an initial voltage of the battery and a supplied charge voltage, an amperemeter 5 for measuring and displaying a current value of the charge voltage passing through the voltmeter 4, a charge electric power recognition unit 6 for recognizing a voltage value and a current value charged into the battery 2 through the voltmeter 4 and the amperemeter 5, a battery state recognition unit 7 for recognizing a voltage value discharged from the battery 2, a controller 8 for determining the state of the battery 2 based on the voltage value and the current value of the charge voltage and the voltage value of the battery 2 which are received through the charge electric power recognition unit 6 and the battery state recognition unit 7, deciding the intensity of current and voltage to be supplied at the time of charging, and controlling an internal operation, a charge voltage control unit 9 for controlling the amount of voltage charged into the battery 2 through the voltmeter 4 and the amperemeter 5 under the control of the controller 8, a charging current control unit 10 for controlling the amount of current charged into the battery 2 under the control of the controller 8, a charging unit 11 for charging the battery 2 with electric power having a controlled current value and voltage value under the control of the controller 8, a driving voltage generator 12 for generating a driving voltage in response to a control signal output from the controller 8 only while the charging is performed, a high frequency variable voltage generator 13 for supplying the charging unit 11 with a high frequency variable voltage having a band of 10MHz to 13MHz by means of high frequency variable oscillation as the driving voltage generator 12 operates so that the high frequency variable voltage is applied to the electrode plate of the battery 2, and a protection circuit 14 for determining whether a charge voltage from the charging unit 11 is applied to the battery 2, and sending the determination result to the controller 8 so that an operating state can be recognized.

The controller 8 controls the charge voltage control unit 9 to adjust the amount of voltage charged into the battery 2 and also controls the charging current control unit 10 to adjust the amount of current charged into the battery 2, while determining the state of the battery 2 based on the voltage value and the current value through the voltmeter 4 and the amperemeter 5. At the same time, the controller 8 controls a variable bandwidth of a high frequency, generated from the high frequency variable voltage generator 13, to be 13MHz in the case of a charging amount of 5%, a discharging amount of 95% and a specific gravity of 1.090, 12.5MHz in the case of a charging amount of 20%, a discharging amount 80% and a specific gravity of 1.120, 12MHz in the case of a charging amount of 35%, a discharging amount of 65% and a specific gravity of 1.150, 11.5MHz in the case of a charging amount of 50%, a discharging amount of 50% and a specific gravity of 1.180, 11MHz in the case of a charging amount of 65%, a discharging amount of 35% and a specific gravity of 1.210, 10.5MHz in the case of a charging amount of 80%, a discharging amount of 20% and a specific gravity of 1.240, and 10MHz in the case of a charging amount of 90%, a discharging amount of 10% and a specific gravity of 1.260 (when an electrolyte temperature of the battery is 25 degrees Celsius) while operating the driving voltage generator 12.

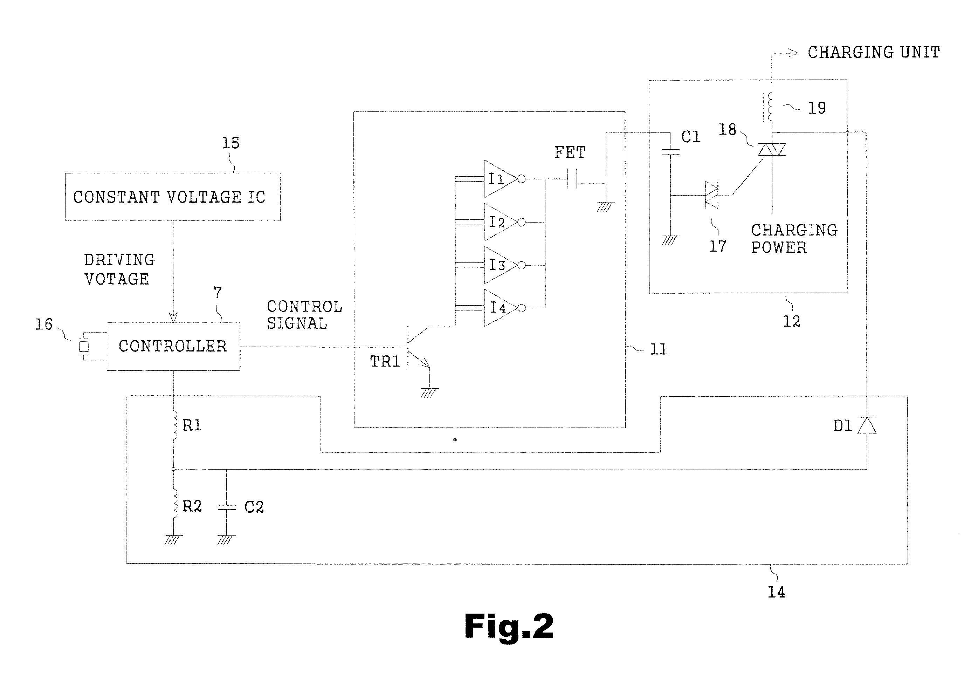

An operation of the present invention constructed above is described in detail with reference to FIGS. 1 and 2.

In the external power supply device 1, the voltmeter 4 connected to the power line 3 connected to the battery 2 measures and displays a voltage value of charge voltage supplied to the battery.

In the case where the battery 2 is a battery for a vehicle, the function of the power supply device 1, for supplying electric power for charging is performed in an alternator.

The amperemeter 5 measures and displays of a current value with respect to the charge voltage.

While the charge voltage supplied to charge the battery 2 passes through the voltmeter 4 and the amperemeter 5, the charge electric power recognition unit 6 recognizes a voltage value and a current value of the charge voltage.

If the solid material decomposing and removing circuit of a battery according to the present invention is first operated, the battery state recognition unit 7 recognizes a voltage value discharged from the battery 2 for 3 to 5 seconds, and displays a recognized voltage value through the voltmeter 4.

The controller 8 that has received the voltage value of the battery as well as the voltage value and the current value of the charge voltage through the charge electric power recognition unit 6 and the battery state recognition unit 7 determines the state of the battery 2, and controls an internal operation while controlling the amount of current and voltage at the time of charging.

In accordance with a charging and discharging method according to an embodiment of the present invention, when an initial voltage of the battery 2 or voltage of a discharging state becomes about 60% of a normal charging capacity (when specific gravity is 1.200 at an electrolyte temperature of 25 degrees Celsius), the controller 8 controls a charging operation.

In other words, the charge voltage control unit 9 controls the amount of voltage, charged into the battery 2, to become 125% of a charge voltage at normal times through the voltmeter 4 and the amperemeter 5 under the control of the controller 8.

The charging current control unit 10 controls the amount of current, charged into the battery 2, to become 105% of current at normal times under the control of the controller 8.

While such charging is performed, the charging unit 11 controls the voltage and current, which are supplied from the power supply device 1 to the battery 2, based on the voltage value and the current value received from the charge voltage control unit 9 and the charging current control unit 10.

The controller 8 receives a frequency for an operation through the oscillator 16 while receiving a driving voltage of 5 V through a constant voltage IC 15.

Further, while such charging is performed, the controller 8 outputs a control signal that repeats ON/OFF according to the oscillation frequency received from the oscillator 16.

A FET having a gate to which the control signal is input through a transistor TR1 and an inverter group I1, I2, I3 and I4 of the driving voltage generator 12 is turned on only when the control signal is "H", and thus applies a driving voltage.

The driving voltage, which has been charged into and discharged from a condenser C1 of the high frequency variable voltage generator 13 connected to a drain of the FET of the driving voltage generator 12, turns on a TRIAC 18 with a higher voltage by means of a DIAC 17 connected to the condenser C1.

The high driving voltage, supplied via the TRIAC 18 of the high frequency variable voltage generator 13, is a high frequency variable voltage having a band of 10MHz to 13MHz. The high frequency variable voltage is applied to the electrode plate of the battery 2 while repeating the turning ON/OFF according to the charging and discharging cycle of the condenser C1 by means of a high frequency variable oscillation function of an oscillating coil 19 only while charging is performed through the power line 3. Thus, sulphuric acid material that has been oxidized and solidified on the electrode plate can be decomposed and returned effectively.

The controller 8 controls the charge voltage control unit 9 to adjust the amount of voltage charged into the battery 2 and also controls the charging current control unit 10 to adjust the amount of current charged into the battery 2, while determining the state of the battery 2 based on the voltage value and the current value through the voltmeter 4 and the amperemeter 5. At the same time, the controller 8 controls a variable bandwidth of a high frequency, generated from the high frequency variable voltage generator 13, to be 13MHz in the case of a charging amount of 5%, a discharging amount of 95% and a specific gravity of 1.090, 12.5MHz in the case of a charging amount of 20%, a discharging amount of 80% and a specific gravity of 1.120, 12MHz in the case of a charging amount of 35%, a discharging amount of 65% and a specific gravity of 1.150, 11.5MHz in the case of a charging amount of 50%, a discharging amount of 50% and a specific gravity of 1.180, 11MHz in the case of a charging amount of 65%, a discharging amount of 35% and a specific gravity of 1.210, 10.5MHz in the case of a charging amount of 80%, a discharging amount of 20% and a specific gravity of 1.240, and 10MHz in the case of a charging amount of 90%, a discharging amount of 10% and a specific gravity of 1.260 (when an electrolyte temperature of the battery is 25 degrees Celsius) while operating the driving voltage generator 12.

The protection circuit 14 includes a reverse direction diode D1 connected to the oscillating coil 19 of the high frequency variable voltage generator 13, divided resistors R1, R2 and a condenser C2. The protection circuit 14 determines whether a high frequency variable voltage is normally applied during charging, and transfers it to the controller 8. Thus, whether normal charging is performed can be determined.

If the battery 2 is charged with 95% or higher of a normal charging capacity (when specific gravity is 1.270 at an electrolyte temperature of 25 degrees Celsius), normal discharging or discharging through an artificial discharging circuit is performed.

Meanwhile, if a charging capacity of the battery 2 is lower than about 60% of a normal charging capacity (when specific gravity is 1.200 at an electrolyte temperature of 25 degrees Celsius), the controller 8 controls the charging operation.

That is, the charge voltage control unit 9 controls the amount of voltage, charged into the battery 2, to become 125% of a charge voltage at normal times through the voltmeter 4 and the amperemeter 5 under the control of the controller 8.

The charging current control unit 10 controls the amount of current, charged into the battery 2, to become 105% of current at normal times under the control of the controller 8.

In the case where the battery 2 is charged with 95% of a normal charging capacity (when specific gravity is 1.270 or higher at an electrolyte temperature of 25 degrees Celsius), the battery 2 whose performance has lowered while the process of performing normal discharging or discharging through an artificial discharging circuit is repeatedly performed three times or more returns to almost its normal state.

In the above, an embodiment of the charging and discharging process for returning the charging capacity of the battery to its normal state has been described. However, the present invention is not limited to the above embodiment.

As described above in detail, in accordance with the solid material decomposing and removing circuit of a battery according to the present invention, only while charging is performed on a battery, a high frequency variable voltage whose driving voltage has changed is supplied to the electrode plate of the battery under the control of the controller. At the same time, the battery state recognition unit determines the state of the battery under the control of the controller, and an internal operation is controlled while controlling the amount of current and voltage at the time of charging. Thus, after voltage of the battery is checked and displayed at an early stage, a high frequency variable voltage having a band of 10MHz to 13MHz is supplied to the power line while charging is performed. Accordingly, sulphuric acid material that has been oxidized and solidified on the electrode plate can be effectively decomposed, and a reduction of a charging capacity of the battery can be prevented, so that the charging state of the battery can return to its original state. Further, the lifespan of the battery is extended, and environmental pollution due to waste battery can be prevented.

While the present invention has been described with reference to the particular illustrative embodiment, it is not to be restricted by the embodiment but only by the appended claims.

It is to be appreciated that those skilled in the art can change or modify the embodiment without departing from the scope and spirit of the present invention.

## Claims

1. A solid material decomposing and removing circuit of a battery, comprising:
a voltmeter 4 connected to a power line 3 for supplying charge electric power from a power supply device 1 to battery 2 and configured to measure and display voltage values of an initial voltage of the battery and a supplied charge voltage;
an amperemeter 5 for measuring and displaying a current value of the charge voltage passing through the voltmeter 4;
a charge electric power recognition unit 6 for recognizing a voltage value and a current value charged into the battery 2 through the voltmeter 4 and the amperemeter 5;
a battery state recognition unit 7 for recognizing a voltage value discharged from the battery 2;
a controller 8 for determining the state of the battery 2 based on the voltage value and the current value of the charge voltage and the voltage value of the battery 2 which are received through the charge electric power recognition unit 6 and the battery state recognition unit 7, deciding the intensity of current and voltage to be supplied at the time of charging, and controlling an internal operation;
a charge voltage control unit 9 for controlling the amount of voltage charged into the battery 2 through the voltmeter 4 and the amperemeter 5 under the control of the controller 8;
a charging current control unit 10 for controlling the amount of current charged into the battery 2 under the control of the controller 8;
a charging unit 11 for charging the battery 2 with electric power having a controlled current value and voltage value under the control of the controller 8;
a driving voltage generator 12 for generating a driving voltage in response to a control signal output from the controller 8 only while the charging is performed;
a high frequency variable voltage generator 13 for supplying the charging unit 11 with a variable voltage of a high frequency by means of high frequency variable oscillation as the driving voltage generator 12 operates so that the high frequency variable voltage is applied to the electrode plate of the battery 2; and
a protection circuit 14 for determining whether a charge voltage from the charging unit 11 is applied to the battery 2, and sending the determination result to the controller 8 so that an operating state can be recognized.

2. The solid material decomposing and removing circuit as claimed in claim 1, wherein the driving voltage supplied through the driving voltage generator 12 controlled by the controller 8 turns on a TRIAC 18 with a higher voltage by means of a DIAC 17 connected to a condenser C1 while being charged into and discharged from the condenser C1 of the high frequency variable voltage generator 13, and
the higher driving voltage supplied through the TRIAC 18 is applied to the electrode plate of the battery 2 while repeating on/off according to a charging/discharging cycle of the condenser C1 only when charging is performed through the power line 3 with a high frequency variable voltage according to the operation of an oscillating coil 19.

3. The solid material decomposing and removing circuit as claimed in claim 1, wherein the controller 8 controls the charge operation of the battery when a charging capacity is lower than 60% of a normal charging capacity by means of the discharging from the battery 2,
the charge voltage control unit 9 controls an amount of voltage, charged into the battery 2, to become 125% of a charge voltage at normal times through the voltmeter 4 and an amperemeter 5 under the control of the controller 8,
charging current control unit 10 controls an amount of current, charged into the battery 2, to become 105% of current at normal times under the control of the controller 8, and
when the charging capacity of the battery 2 is 95% or more of a normal charging capacity, a process of performing normal discharging or discharging through an artificial discharging circuit is repeatedly performed three or more times.

4. The solid material decomposing and removing circuit as claimed in claim 1, wherein the controller 8 controls the charge voltage control unit 9 to adjust the amount of voltage charged into the battery 2, controls the charging current control unit 10 to adjust the amount of current charged into the battery 2, while determining the state of the battery 2 based on the voltage value and the current value through the voltmeter 4 and the amperemeter 5, and controls the variable bandwidth of the high frequency, generated from the high frequency variable voltage generator 13, to be 13MHz in the case of a charging amount of 5%, a discharging amount of 95% and a specific gravity of 1.090, 12.5MHz in the case of a charging amount of 20%, a discharging amount of 80% and a specific gravity of 1.120, 12MHz in the case of a charging amount of 35%, a discharging amount of 65% and a specific gravity of 1.150, 11.5MHz in the case of a charging amount of 50%, a discharging amount of 50% and a specific gravity of 1.180, 11MHz in the case of a charging amount of 65%, a discharging amount of 35% and a specific gravity of 1.210, 10.5MHz in the case of a charging amount of 80%, a discharging amount of 20% and a specific gravity of 1.240, and 10MHz in the case of a charging amount of 90%, a discharging amount of 10% and a specific gravity of 1.260, when an electrolyte temperature of the battery is 25 degrees Celsius, while operating the driving voltage generator 12.
